# EUROPEAN PATENT SPECIFICATION

(11) **EP 3 035 467 B1**
(45) Date of publication and mention of the grant of the patent: **26.08.2020**
(21) Application number: 15200466.9
(22) Date of filing: 16.12.2015
(51) Int. Cl.: H02G 3/18

(54) **CONTROL DEVICE OF FLUSH TYPE FOR AT LEAST ONE ELECTRIC USER APPLIANCE**
STEUERUNGSVORRICHTUNG DES BÜNDIGEN TYPS FÜR MINDESTENS EINE ELEKTRISCHE BENUTZERANWENDUNG
DISPOSITIF DE COMMANDE DE TYPE AFFLEURÉ POUR AU MOINS UN APPAREIL UTILISATEUR ÉLECTRIQUE

(30) Priority: 17.12.2014 IT MI20142169
(43) Date of publication of application: 22.06.2016
(73) Proprietor: Bticino S.p.A., 21100 Varese (IT)
(72) Inventor: BRAGHINI, Roberto, 21100 VARESE (VA) (IT); RIVA, Paolo, 21100 VARESE (VA) (IT)
(74) Representative: Biallo, Dario

(56) References cited:
- EP-A1- 1 635 434
- EP-A1- 1 804 353
- EP-A2- 0 436 804
- EP-A2- 1 343 240
- EP-A2- 2 477 290
- GB-A- 2 469 223

## Description

The present invention refers to a control device of the flush type for electric user appliances particularly but not exclusively useful in the field of electrotechnics.

In the currently existing civil electric systems, the power supply of the user apparatuses, like for example one or more light sources or motorised roller-shutters, is controlled by using control devices adapted to open or to close the connection between the supply line of the system and a user apparatus.

Such control devices of the flush type can be integrated in a wall of a room by coupling them with corresponding receiving seats of frames for closing boxes generally flush-mounted into the walls themselves; such boxes, as known, allow the housing of the aforementioned control devices, of the electrical sockets, as well as their connection to the electric system.

In particular, control devices of the flush type of a first type are known, which comprise a box-shaped body provided with user interface means on the face of the apparatus intended to remain visible and containing electric and/or electronic actuation circuits inside it, adapted to open or close the connection between the supply line of the system and a user apparatus.

The interface means can, for example, comprise control elements of different types, for example switches or button adjusters, knob switches or adjusters, touchscreens, detectors of vocal or gesture commands.

The electric and/or electronic actuation circuits can, for example, comprise one or more relays according to the user apparatus with which the control device of the flush type is associated, or a dimmer, as well as a microprocessor configured to receive and transmit commands. In particular, the relay can be of the timer type, i.e. a relay capable of closing/opening an electric switch with a delay with respect to the moment at which it is turned on/off. Such a timer relay is particularly used when the user apparatus to be controlled is a LED lamp or motorised roller-shutters. In any case, if a failure occurs at the sole interface means or at the sole actuation circuits of a control device of the flush type of the first type, it is thus necessary to replace the entire device itself.

It is not possible, indeed, just to replace the interface means or the actuation circuits since they are integrated in the same box-shaped body.

Such a drawback is overcome by control devices of the flush type of a second type that comprise a user interface module and an actuation module made in two distinct box-shaped bodies that are arranged to be connected to one another for example through a communication BUS.

In particular, the user interface module comprises the interface means and a microprocessor whereas the actuation module comprises the electric and/or electronic actuation circuits, a microprocessor and a storage unit associated therewith.

In this way, it is possible to install the two modules both in the same box of the flush type and in two distinct boxes.

For example, it is possible to install the actuation module in a box of the flush type close to the user apparatus to be controlled and the interface module wherever it is desired to without any restriction dictated by the position of the actuation module. Moreover, it is possible to create a real communication network by connecting a plurality of actuation modules, each having a different function, and a plurality of interface modules to a BUS.

In this case, for example, the microprocessors of the interface modules are configured to send a control signal on the BUS together with a preset identification code of the destination actuation module; correspondingly, the microprocessors of the actuation modules are configured to receive the aforementioned control signal and verify whether the identification code received corresponds to its own identification code stored in the respective storage units.

In this way, although the control signal emitted by a single interface module is received by all of the actuation modules connected to the BUS, only the actuation module corresponding to the identification code associated with the control signal is actuated.

The maintenance of the control devices of the flush type of the second type results to be much simpler and less expensive with respect to that of the devices of the first type. Indeed, in case a failure occurs at the interface means or at the actuation circuits, it is sufficient to only replace the respective module and not the entire device.

Against these advantages, however, the control devices of the flush type of the second type have greater bulks with respect to control devices of the first type, requiring a space for mounting two box-shaped bodies instead of just one. Moreover, the control devices of the flush type of the second type are also very expensive, requiring the presence of microprocessors both in the interface module and in the actuation module.

Document EP 1635434A1 describes a control device of the flush type comprising a first module and a second module intended to be connected one to each other. In particular, such a second module can be provided with interface means like buttons or a display.

Document EP 2477290A2 describes a device comprising a box-shaped element of the flush type arranged to be connected to electric cables and an electronic device adapted to be inserted into the box-shaped element and connected thereto by respective connector.

Document GB 2469223A describes an electric device comprising a frontal panel and a rear box adapted to be mechanically and electrically connected one to each other by respective connectors.

Document EP 1804353A1 describes an electric device which has a printed circuit board, on the upper side of which, each essential functional element is arranged for the operation of assigned actuators.

Document EP 0436804A2 describes an electrical installation unit for domestic applications comprising a housing that contains universal interface, an electrical circuit with a microprocessor, memory and other components.

The aim of the present invention is to overcome the aforementioned drawbacks and in particular to devise a control device of the flush type for electric user appliances that requires simple and inexpensive maintenance and at the same time is inexpensive and not very bulky.

This and other aims according to the present invention are reached by making a control device of the flush type for electric user appliances as outlined in claim 1.

Further features of the control device of the flush type for electric user appliances are the subject-matter of the dependent claims.

The features and advantages of a control device of the flush type for electric user appliances according to the present invention will become clearer from the following description, given as an example and not for limiting purposes, referring to the attached schematic drawings, in which:
- figures 1a and 1b are, respectively, a first and a second schematic perspective view of an embodiment of a control device of the flush type according to the present invention partially assembled;

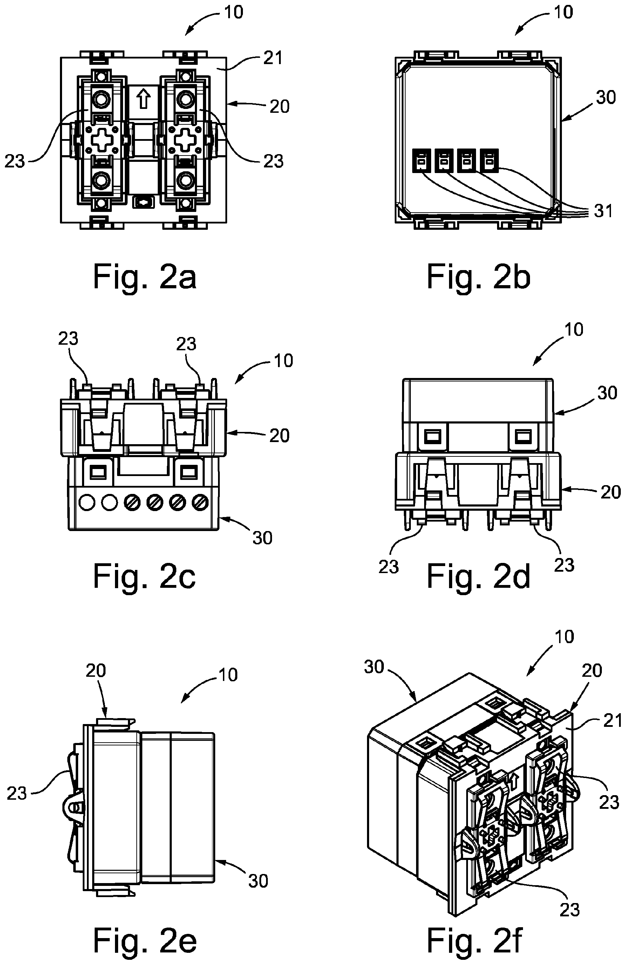

- figures 2a, 2b, 2c, 2d, 2e and 2f are six schematic views - front, rear, from above, from below, side and perspective, respectively - of the control device of the flush type of figures 1a and 1b in assembly configuration.

With reference to the figures, a control device of the flush type for at least one electric user appliance is shown, wholly indicated with 10.

Such a control device 10 comprises an interface module 20 that has a box-shaped body advantageously arranged to be mounted on a frame for closing boxes of the flush type for electric systems. Such a box-shaped body has, in particular, a front face 21 intended to remain visible during use and a rear face 22 opposite the front face 21.

The interface module 20, in particular, comprises user interface means 23 configured for receiving a command from a user and for generating a corresponding actuation signal.

Such interface means 23 comprise, in particular, at least one control element 23 arranged at the front face 21 of the interface module 20. The control element 23 can, for example, be a switch or a button adjuster, a knob adjuster or switch, a touchscreen, a detector of voice commands, a detector of gesture commands, a wireless receiver of commands for example by radio frequency or infrared.

Advantageously, the interface means 23 comprise, inside the interface module 20, an electronic processing and control unit (not illustrated) associated with the at least one control element 23; such an electronic processing unit is configured to generate the actuation signal further to the operation of the control element 23.

The interface module 20 comprises, on the rear face 22, a port 24 for the connection to a communication BUS through which it is possible for example to remotely configure the electronic processing and control unit as well as transmit the electric power supply for the interface module 20.

Alternatively or in addition to the possibility of a remote configuration, the electronic processing and control unit can also be configured manually through a dip switch or other manual configurators accessible on the box-shaped body of the interface module 20.

In any case, the configuration of the electronic processing and control unit varies according to the electric user appliance to be controlled in a *per se* known way. For example, the processing and control unit can be configured so as to generate an actuation signal after a certain time interval following the actuation of the control element 23.

The control device 10 also comprises an actuation module 30 arranged to be connected to the interface module 20, to a supply line of an electric system and to the at least one electric user appliance to be controlled. Such an actuation module 30 also has a box-shaped body.

Preferably, the actuation module 30, at one of its faces, has a plurality of terminals 31 for the connection with the supply line and the electric user appliance.

The actuation module 30 also comprises electric and/or electronic actuation circuits (not illustrated) configured to control the power supply of the at least one electric user appliance based on the actuation signal generated by the interface means 21.

Such electric and/or electronic actuation circuits comprise at least one actuator like a timer relay and/or an electronic regulator, so as to be able to control, for example, the switching on/off and/or the adjustment of the light intensity of a lamp or the actuation of motorised roller-shutters. The actuation can be characterised by at least one parameter, like for example the actuation delay of a relay, and it changes as the type of actuator present in the actuation module 30 changes.

For example, the actuation delay, i.e. the delay with which the actuation signal must be generated so that the change of status of a relay occurs at the same time as the zero crossing of the voltage of the supply line, can vary from relay to relay.

The electric and/or electronic actuation circuits comprise a storage unit (not illustrated) in which identification data of the at least one actuator and at least one actuation parameter of the actuator itself are stored.

In this case, therefore, the processing and control unit is configured to read the data stored in the storage unit and to generate the actuation signal further to the operation of the control element also based on the data read.

In case the at least one actuator is a timer relay and the actuation parameter is the delay of the relay itself, the actuation module 30 is preferably provided with a detector device for detecting the instant of the zero crossing of the voltage of the supply line.

In this case, such a detector device sends the data detected to the electronic processing and control unit so that it is able to generate the actuation signal based on the data received by the detector device and the data read in the storage unit in such a way that the change of state of a relay occurs at the same time as the zero crossing of the voltage of the supply line.

According to the present invention, the two modules 20 and 30 comprise connection means 25, 35, 26, 36 capable of reversibly coupling the actuation module 30 at the back of the interface module 20 in such a way that they become integral with one another.

The face of the box-shaped structure of the actuation module 30 that is intended in assembly to be opposite the rear face 22 of the interface module will hereinafter be indicated as coupling face 32.

Preferably, such connection means 25, 35, 26, 36 comprise an electric male connector 25 and an electric female connector 35 which are arranged to fit into one another, being made one on the interface module 20 and the other on the actuation module 30 or vice-versa.

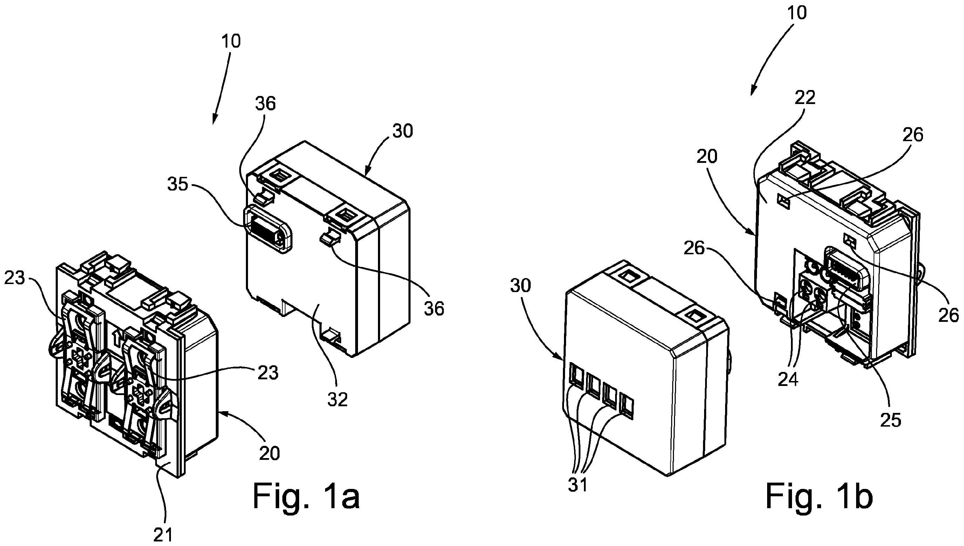

In the particular embodiment illustrated in figure 1a and 1b, the electric male connector 25 is made on the rear face 22 of the interface module 20, whereas the electric female connector 35 is made on the coupling face 32 of the actuation module 30. The coupling face 32 corresponds in the figures to the face opposite the one where the terminals are present. More generally, such a coupling face 32 can be any face of the box-shaped body of the actuation module 30 except for that where the terminals are present.

The electric male 25 and female 35 connectors, when they are fitted into one another, make an electric connection between the interface module 20 and the actuation module 30. Such an electric connection allows the electronic processing and control unit to carry out the reading of the data stored in the storage unit and to transmit the actuation signal to the at least one actuator. Moreover, in case the interface module 20 is not provided with the port 24 or in the case in which such a port 24 is not used to supply electric power to the module 20, the electric connection made by the male 25 and female 35 connectors can be used to supply the power coming from the line connected to the terminals 31 of the actuation module 30 to the interface module 20.

Preferably, the connection means 25, 35, 26, 36 also comprise at least one hook element 36 and at least one receiving seat 26 made in corresponding opposite positions, the one on the coupling face 32 of the actuation module 30 and the others on the rear face 22 of the interface module 20 or vice-versa. The at least one hook element 36 is, in particular, arranged to engage reversibly in the at least one receiving seat 26.

The operation of the control device of the flush type 10 is as follows.

Based on the user apparatus to be controlled, the appropriate actuation module 30 is selected, i.e. the one containing the actuator most suitable for the apparatus.

The interface module 20 can be selected as desired according to the control element 23 with which it is provided. The electronic processing and control unit is configured through manual configurators or remotely using a communication BUS connected to the connection port 24. Such a configuration occurs based on the user apparatus to be controlled and the actuation strategy wished to be implemented. For example, the electronic processing and control unit could be configured so as to generate an actuation signal after a certain time interval.

Once the relative wiring is ready, the interface module 20 is connected to the actuation module 30. Through the electric connection made by the male 25 and female 35 connectors the electronic processing and control unit reads the data stored in the storage unit and then identifies the actuator present in the actuation module 30 and acquires the relative actuation parameter stored.

In this way, following the operation of the control element 23 the electronic processing and control unit generates an actuation signal taking into account not only its own configuration but also the actuation parameter read.

In the case in which the actuation module 30 is replaced, the interface module 20 is able to adapt immediately to such a change since the electronic processing and control unit, when the electrical connection is made between the two modules, reads the data stored in the storage unit identifying the new actuator.

From the description made the features of the control device subject-matter of the present invention are clear, as well as the relative advantages thereof. Indeed, the control device according to the present invention, when it is in assembly configuration, can be installed at a single box of the flush type for electric systems occupying the space of a single module, thus resulting to be not very bulky. At the same time the control device according to the present invention allows easy and inexpensive maintenance since, following a failure in one of the two modules it is sufficient to replace the faulty module.

Moreover, a single actuation module can also be applied to a different interface module from the one initially associated.

For example, an actuation module associated with a first interface module that comprises a button switch for controlling the switching on/off of a LED lamp can be moved into another box of the flush type to couple with a second interface module that comprises a touchscreen for controlling the actuation of motorised roller-shutters.

A single interface module can also be applied to an actuation module comprising an actuator different from the one present in the module initially associated. In this case, the electronic processing and control unit identifies the new actuator and generates corresponding actuation signals.

Finally, it is clear that the device thus conceived can undergo numerous modifications and variants, all of which are covered by the invention; moreover, all of the details can be replaced by technically equivalent elements. In practice, the materials used, as well as the sizes, can be whatever according to the technical requirements.

## Claims

1. Control device (10) of flush type for at least one electric user appliance comprising:
- an interface module (20) having a box-shaped body which is arranged to be mounted on a frame for closing boxes of the flush type for electric systems and which has a front face (21) intended to remain visible and a rear face (22) opposite said front face (21), said interface module (20) comprising user interface means (23) configured for receiving a command from a user and for generating a corresponding actuation signal;
- an actuation module (30) having a box-shaped body and being arranged to be connected to said interface module (20), to a supply line and to said at least one electric user appliance,
said interface module (20) and said actuation module (30) comprising connection means (25, 35, 26, 36) capable of reversibly coupling said actuation module (30) at the back of said interface module (20) so that they become integral with one another, said interface means (23) comprising at least one control element (23) arranged at said front face (21) of said interface module (20) and an electronic processing and control unit associated with said at least one control element (23), said control device being **characterized in that** said actuation module (30) comprises electric and/or electronic actuation circuits configured for controlling the power supply of said electric user appliance based on said actuation signal, said electric and/or electronic actuation circuits comprises at least one actuator and a storage unit in which identification data and at least an actuation parameter of said at least one actuator are stored, said electronic processing and control unit being configured to read said data stored in said storage unit and to generate said actuation signal following the operation of said control element (23) based on said read data, said interface module (20) comprises, on said rear face, a port (24) for connecting to a communication BUS.

2. Control device (10) of the flush type for at least one electric user appliance according to claim 1 **characterised in that** said connection means (25, 35, 26, 36) comprise an electric male connector (25) and an electric female connector (35) which are arranged to fit into one another, one being made on said interface module (20) and the other one being made on said actuation module (30) or vice versa.

3. Control device (10) of the flush type for at least one electric user appliance according to claim 1 or 2 **characterised in that** said connection means (25, 35, 26, 36) comprise at least one hook element (36) arranged to engage in at least one corresponding receiving seat (26), said at least one hook element (36) and said at least one receiving seat (26) being made at corresponding opposite positions, the one on said rear face (22) of said interface module (20) and the other ones on a coupling face (32) of said actuation module (30) or vice versa.

## Patentansprüche

1. Steuerungsvorrichtung (10) des bündigen Typs für mindestens eine elektrische Benutzeranwendung, umfassend:
- ein Schnittstellenmodul (20), das einen kastenförmigen Körper aufweist, der angeordnet ist, um an einem Rahmen zum Schließen von Kästen des bündigen Typs für elektrische Systeme montiert zu werden, und der eine vordere Seite (21), die dazu bestimmt ist, sichtbar zu bleiben, und eine hintere Seite (22) aufweist, die der vorderen Seite (21) entgegengesetzt ist, wobei das Schnittstellenmodul (20) Benutzerschnittstellenmittel (23) umfasst, die ausgestaltet sind, um einen Befehl von einem Benutzer zu empfangen und um ein entsprechendes Betätigungssignal zu erzeugen;
- ein Betätigungsmodul (30), das einen kastenförmigen Körper aufweist und angeordnet ist, um mit dem Schnittstellenmodul (20), mit einer Versorgungsleitung und mit der mindestens einen elektrischen Benutzeranwendung verbunden zu sein,
wobei das Schnittstellenmodul (20) und das Betätigungsmodul (30) Verbindungsmittel (25, 35, 26, 36) umfassen, die in der Lage sind, das Betätigungsmodul (30) reversibel an die Rückseite des Schnittstellenmoduls (20) zu koppeln, derart dass sie einteilig miteinander werden,
wobei die Schnittstellenmittel (23) mindestens ein Steuerungselement (23), das an der vorderen Seite (21) des Schnittstellenmoduls (20) angeordnet ist, und eine elektronische Verarbeitungs- und Steuerungseinheit umfassen, die dem mindestens einen Steuerungselement (23) zugehörig ist, wobei die Steuerungsvorrichtung **dadurch gekennzeichnet ist, dass** das Betätigungsmodul (30) elektrische und/oder elektronische Betätigungsschaltungen umfasst, die zum Steuern der Stromversorgung der elektrischen Benutzeranwendung basierend auf dem Betätigungssignal ausgestaltet sind, wobei die elektrischen und/oder elektronischen Betätigungsschaltungen mindestens ein Betätigungsorgan und eine Speichereinheit umfassen, in der Identifikationsdaten und mindestens ein Betätigungsparameter von dem mindestens einen Betätigungsorgan gespeichert sind, wobei die elektronische Verarbeitungs- und Steuerungseinheit ausgestaltet ist, um die in der Speichereinheit gespeicherten Daten zu lesen und um das Betätigungssignal im Anschluss an die Betätigung des Steuerungselements (23) basierend auf den gelesenen Daten zu erzeugen, wobei das Schnittstellenmodul (20) auf der hinteren Seite einen Anschluss (24) zum Verbinden mit einem Kommunikations-BUS umfasst.

2. Steuerungsvorrichtung (10) vom bündigen Typ für mindestens eine elektrische Benutzeranwendung nach Anspruch 1, **dadurch gekennzeichnet, dass** die Verbindungsmittel (25, 35, 26, 36) einen elektrischen Stecker (25) und eine elektrische Buchse (35) umfassen, die angeordnet sind, um ineinanderzupassen, wobei eines auf dem Schnittstellenmodul (20) hergestellt ist und das andere auf dem Betätigungsmodul (30) hergestellt ist oder umgekehrt.

3. Steuerungsvorrichtung (10) des bündigen Typs für mindestens eine elektrische Benutzeranwendung nach Anspruch 1 oder 2, **dadurch gekennzeichnet, dass** die Verbindungsmittel (25, 35, 26, 36) mindestens ein Hakenelement (36) umfassen, das angeordnet ist, um in mindestens einen entsprechenden Aufnahmesitz (26) einzugreifen, wobei das mindestens eine Hakenelement (36) und der mindestens eine Aufnahmesitz (26) an entsprechenden gegenüberliegenden Positionen, das eine auf der hinteren Seite (22) des Schnittstellenmoduls (20) und die anderen auf einer Kopplungsseite (32) des Betätigungsmoduls (30) hergestellt sind oder umgekehrt.

## Revendications

1. Dispositif de commande (10) de type affleuré pour au moins un appareil utilisateur électrique comprenant :
- un module d'interface (20) ayant un corps en forme de coffret qui est conçu pour être monté sur un cadre pour fermer des coffrets du type affleuré pour des systèmes électriques et qui possède une face avant (21) destinée à rester visible et une face arrière (22) opposée à ladite face avant (21), ledit module d'interface (20) comprenant des moyens d'interface utilisateur (23) configurés pour recevoir une instruction à partir d'un utilisateur et pour générer un signal d'actionnement correspondant ;
- un module d'actionnement (30) ayant un corps en forme de coffret et étant conçu pour être connecté audit module d'interface (20), à une ligne d'alimentation et audit au moins un appareil utilisateur électrique,
ledit module d'interface (20) et ledit module d'actionnement (30) comprenant des moyens de connexion (25, 35, 26, 36) aptes à coupler de manière réversible ledit module d'actionnement (30) à l'arrière dudit module d'interface (20) de sorte qu'ils deviennent solidaires l'un de l'autre, lesdits moyens d'interface (23) comprenant au moins un élément de commande (23) agencé au niveau de ladite face avant (21) dudit module d'interface (20) et une unité électronique de traitement et de commande associée audit au moins un élément de commande (23),
ledit dispositif de commande étant **caractérisé en ce que** ledit module d'actionnement (30) comprend des circuits d'actionnement électriques et/ou électroniques configurés pour commander l'alimentation électrique dudit appareil utilisateur électrique sur ledit signal d'actionnement, lesdits circuits d'actionnement électriques et/ou électroniques comprennent au moins un actionneur et une unité de stockage dans laquelle des données d'identification et au moins un paramètre d'actionnement dudit au moins un actionneur sont stockés, ladite unité électronique de traitement et de commande étant configurée pour lire lesdites données stockées dans ladite unité de stockage et pour générer ledit signal d'actionnement à la suite de l'opération dudit élément de commande (23) sur la base desdites données lues, ledit module d'interface (20), sur ladite face arrière, un port (24) pour une connexion à un BUS de communication.

2. Dispositif de commande (10) du type affleuré pour au moins un appareil utilisateur électrique selon la revendication 1 **caractérisé en ce que** lesdits moyens de connexion (25, 35, 26, 36) comprennent un connecteur électrique mâle (25) et un connecteur électrique femelle (35) qui sont conçus pour s'emboîter l'un dans l'autre, l'un étant réalisé sur ledit module d'interface (20) et l'autre étant réalisé sur ledit module d'actionnement (30) ou vice-versa.

3. Dispositif de commande (10) du type affleuré pour au moins un appareil utilisateur électrique selon la revendication 1 ou 2 **caractérisé en ce que** lesdits moyens de connexion (25, 35, 26, 36) comprennent au moins un élément crochet (36) conçu pour venir en prise dans au moins un siège de réception correspondant (26), ledit au moins un élément crochet (36) et ledit au moins un siège de réception (26) étant réalisés à des positions opposées correspondantes, l'un sur ladite face arrière (22) dudit module d'interface (20) et les autres sur une face de couplage (32) dudit module d'actionnement (30) ou vice-versa.
